# EUROPÄISCHE PATENTANMELDUNG

(11) **EP 0 840 316 A1**
(43) Veröffentlichungstag der Anmeldung: **06.05.1998**
(21) Anmeldenummer: 97118131.8
(22) Anmeldetag: 19.05.1995
(51) Int. Cl.: G11B 17/22

(54) **Wiedergabe- und/oder Aufzeichnungsgerät und/oder Ausgabegerät für als Informationsträger ausgebildete Platten**

(30) Priorität: 24.05.1994 DE 4418116
(62) Teilanmeldung aus: 95920729.1
(71) Anmelder: NSM AKTIENGESELLSCHAFT, 55411 Bingen (DE)
(72) Erfinder: Menke, Wilhelm, 55411 Bingen (DE); Heidersberger, Börge, 55411 Bingen (DE)
(74) Vertreter: Becker, Bernd, Dipl.-Ing.

(57) **Zusammenfassung**

Die Erfindung betrifft ein Wiedergabe- und/oder Aufzeichnungs- und/oder Ausgabegerät für als Informationsträger ausgebildete Platten (1), insbesondere CD-Platten, mit gegenüberliegenden Plattenmagazinen (4), die in horizontal übereinanderliegenden Aufnahmefächern (6) Plattenhalter (7) für mindestens eine Platte (1) aufnehmen, und einer zwischen den Plattenmagazinen (4) verfahrbaren Transporteinrichtung (9). Bei diesem Gerät sind mehrere Plattenhalter (7) mit jeweils zugehöriger Platte (1) innerhalb einer Kassette (13) untergebracht sind, die in einem entsprechend vergrößerten Aufnahmefach (6) des Plattenmagazins (4) abgelegt ist. Dadurch wird eine bedienerfreundliche Handhabung eines Plattenhalters (7) mit einer darin eingelegten Platte (1) außerhalb des Gerätes gewährleistet.

## Beschreibung

Die Erfindung bezieht sich auf ein Wiedergabe- und/oder Aufzeichnungs- und/oder Ausgabegerät für als Informationsträger ausgebildete Platten, insbesondere CD-Platten, mit
- gegenüberliegenden Plattenmagazinen, die in horizontal übereinanderliegenden Aufnahmefächern Plattenhalter für mindestens eine Platte aufnehmen,
- einer zwischen den Plattenmagazinen angeordneten, rechnergesteuerten Transporteinrichtung zur wahlweisen Hin- und Herbeförderung eines einzelnen Plattenhalters mit der Platte zwischen beliebigen Aufnahmefächern, zwischen einem Aufnahmefach und mindestens einem Laufwerk zum Auslesen oder Einschreiben von Informationen von der bzw. auf die Platte oder zwischen einem Aufnahmefach oder einem Laufwerk und einem Platten-Lade/Ausgabe-Schubfach, und
- zwei auf der Transporteinrichtung horizontal verfahrbaren Auszugeinrichtungen für die Plattenhalter.

Aus der EP 0 138 005 B1 ist eine Plattenwechselvorrichtung bekannt, bei der zwischen zwei vertikalen, Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Sonach kann immer nur eine Greifeinrichtung des Plattenhüllengreifers eine Bereitschaftsposition zur Herausnahme einer Plattenhülle aus dem zugeordneten Plattenmagazin einnehmen, d.h. wenn eine Plattenhülle aus dem anderen Plattenmagazin entnommen werden soll, dann muß zunächst der Plattenhüllengreifer in Richtung dieses Plattenmagazins verfahren werden, um die andere Greifeinrichtung in eine Bereitschaftsposition zur Herausnahme einer Plattenhülle aus dem ihr zugeordneten Plattenmagazin zu bringen, was einen zusätzlichen Verfahrweg des Plattenhüllengreifers darstellt, der die Transportzeit der die gewünschte Platte enthaltenden Plattenhülle von dem Plattenmagazin zu dem Plattenteller der Abspieleinheit erhöht.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt.

Ferner zeigt die EP 0 439 483 B1 ein Plattenabspielgerät mit zwei einander gegenüberliegenden Plattenmagazinen mit einer in Stapelrichtung der Plattenmagazine bewegbaren Transporteinrichtung zur Hin- und Herbeförderung eines Plattenhalters mit einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem ein- und ausfahrbaren Greifarm. Die unabhängig voneinander verfahrbaren Auszugeinrichtungen befinden sich jeweils in einer Bereitschaftsposition zur Herausnahme eines in dem zugeordneten Plattenmagazin vorhandenen Plattenhalters für eine Platte, oder die eine Auszugeinrichtung ist in eine Mittenposition gefahren, in der sie die aus dem zugehörigen Plattenmagazin entnommene Platte mit dem Plattenhalter konzentrisch zu dem Plattenteller der Abspieleinheit fixiert, während die andere Auszugeinrichtung in ihre Bereitschaftsposition für das andere Plattenmagazin verbleibt.

Schließlich offenbart die WO-A-93/11 535 ein Wiedergabe- und/oder Aufzeichnungs- und/oder Ausgabegerät für als Informationsträger ausgebildete Platten, das zwei Plattenmagazine für Plattenhalter, eine Transporteinrichtung mit zwei horizontal verfahrbaren Auszugseinrichtungen, ein Laufwerk und ein Platten-Lade/Ausgabe-Schubfach enthält. Die Auszugseinrichtungen können jeweils wahlweise sowohl in der Bereitschaftsposition als auch in der Transporteinrichtungsposition in eine Eingriffsposition mit dem Plattenhalter gebracht werden.

Der Erfindung liegt die Aufgabe zugrunde, ein Wiedergabe- und/oder Aufzeichnungs- und/oder Ausgabegerät für als Informationsträger ausgebildete Platten der eingangs genannten Art zu schaffen, das bei einem einfachen und kompakten Aufbau eine bedienerfreundliche Handhabung eines Plattenhalters mit einer darin eingelegten Platte außerhalb des Gerätes gewährleistet.

Diese Aufgabe wird erfindungsgemäß dadurch gelöst, daß mehrere Plattenhalter mit jeweils zugehöriger Platte innerhalb einer Kassette untergebracht sind, die in einem entsprechend vergrößerten Aufnahmefach des Plattenmagazins abgelegt ist. Sonach wird erheblich Platz und Material am Plattenmagazin eingespart, da viele Zwischenwände im Plattenmagazin nicht mehr notwendig sind. Bei der Entnahme einer Kassette werden somit eine Mehrzahl von Platten gleichzeitig mitgeführt ohne jeden einzelnen Plattenhalter mit entsprechender Platte aussuchen oder gegebenenfalls zusammenstellen zu müssen. Thematisch zusammengehörige Platten können auf praktische Weise zusammengefaßt in Kassetten in das Plattenmagazin eingeordnet und wieder entnommen werden. Dies ist insbesondere außerhalb des ein Wiedergabe- und/oder Aufzeichnungs- und/oder Ausgabegerätes erwünscht, wenn das Plattenmagazin beispielsweise zu einem anderen Gerät transportiert und dort eingesetzt werden soll.

Der der Erfindung zugrundeliegende Gedanke wird in der nachfolgenden Beschreibung anhand eines Ausführungsbeispieles, das in der Zeichnung dargestellt ist, näher erläutert. Es zeigt:

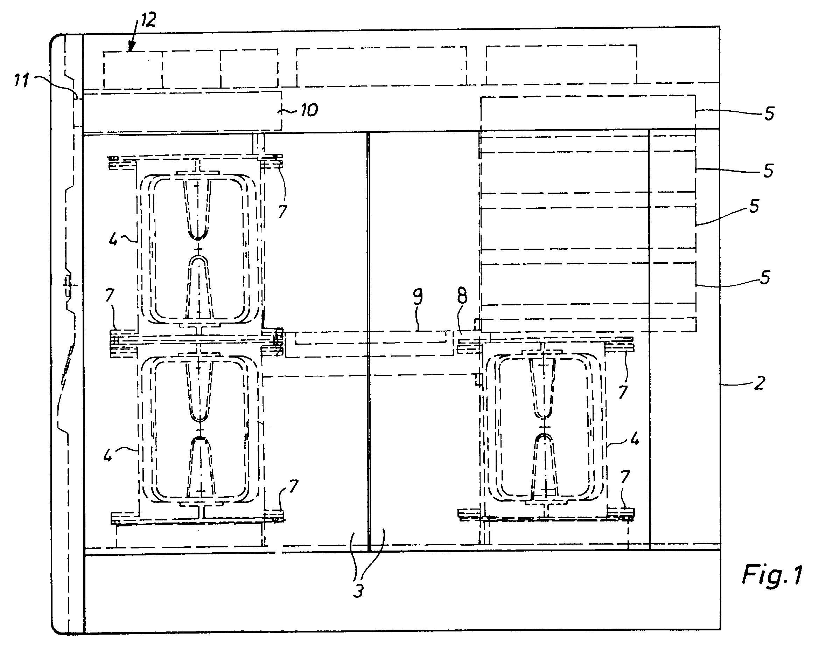

- Fig. 1: eine Vorderansicht eines Wiedergabe-Aufzeichnungs- und Ausgabegerätes für Platten nach der Erfindung und
- Fig. 2: eine Vorderansicht einer mehrere Plattenhalter mit jeweils eingelegter Platte aufnehmenden Kassette zum Einsatz in ein Plattenmagazin.

Das Wiedergabe-/Aufzeichnungs- und Ausgabegerät für Platten 1 besitzt ein Gehäuse 2 mit einer an der Vorderseite angebrachten Doppel-Tür 3. Seitlich im unteren Bereich des Gehäuses 2 sind zwei gegenüberliegende Plattenmagazine 4 angeordnet. Oberhalb des linken Plattenmagazins 4 befindet sich ein weiteres auswechselbares Plattenmagazin 4, während oberhalb des rechten Plattenmagazins 4 ein Turm aus vier auswechselbaren Laufwerken 5 vorgesehen ist. Die Laufwerke 5 dienen zum Auslesen oder Einschreiben von Informationen von einer bzw. auf eine Platte 1.

Die untereinander identisch aufgebauten Plattenmagazine 4 weisen jeweils eine Vielzahl übereinanderliegend angeordneter Aufnahmefächer 6 für die Lagerung einer entsprechenden Anzahl an je eine Platte 1 aufnehmender Plattenhalter 7 auf. Der Freiraum zwischen den Plattenhaltern 7 ist hierbei kleiner als die Dicke der in den Plattenhalter 7 eingelegten Platte 1. Weiterhin ist die Dicke des Plattenhalters 7 nur geringfügig größer als die Dicke der Platte 1. Die Platte 1 hat eine Dicke von ca. 1,2 mm und der Plattenhalter 7 eine Dicke von etwa 2,8 mm. Dadurch wird eine äußerst geringe Höhe für ein Plattenmagazin 4 mit fünfzig übereinandergestapelten Plattenhaltern 7 erreicht. In dem Aufnahmefach 6 ist der Plattenhalter 7 durch zwei gegenüberliegende am Plattenmagazin 4 angebrachte, nicht dargestellte Federelemente in seiner Lage gesichert. In dieser Lage steht der Plattenhalter 7 durch Freimachung der entsprechenden Seitenwand des Plattenmagazins 4 soweit über der Auszugseite des Plattenmagazins 4 vor, daß er von einer der beiden Auszugeinrichtungen 8 einer in dem Raum zwischen den Plattenmagazinen 4 und den Laufwerken 5 auf- und abverfahrbaren Transporteinrichtung 9 für den eine Platte 1 aufnehmenden Plattenhalter 7 erfaßt werden kann. Oberhalb der beiden linken Plattenmagazine 4 befindet sich ein Platten-Lade-/Ausgabe-Schubfach 10, dem seitlich ein Ein-/Ausgabeschacht 12 für einen Plattenhalter 7 mit einer Platte 1 zugeordnet und das ebenfalls von der Transporteinrichtung 9 bedienbar ist. In der ausgefahrenen Stellung des Platten-Lade-/Ausgabe-Schubfaches 10 verbleibt der Plattenhalter 7 zwangsgesteuert in dem Schubfach 10, d.h. bei einer Ein- oder Ausgabe einer Platte 1 in das Schubfach 10 kann der Plattenhalter 7 nicht aus diesem entnommen werden. Sämtliche Funktionen des Gerätes werden über eine oberhalb des Platten-Lade-/Ausgabe-Schubfaches 10 angeordnete interne Rechnereinheit 12 gesteuert. Die Arbeitgsgänge, wie Plattenwechsel, Datenabruf usw. werden vom internen Rechner 12 durchgeführt, wozu die Transporteinrichtung 9 eingesetzt wird.

Die beiden horizontal auf der Transporteinrichtung 9 verfahrbaren Auszugeinrichtungen 8 sind gleichzeitig relativ zueinander gegenläufig sich kreuzend bewegbar und zwar zwischen einer Bereitschaftsposition zur Herausnahme eines bestimmten Plattenhalters 7 mit der gewünschten Platte 1 aus dem entsprechenden Plattenmagazin 4 bzw. dem entsprechenden Laufwerk 5 bzw. aus dem Platten-Lade-/Ausgabe-Schubfach 10 und einer Transporteinrichtungsposition zur Herausnahme des Plattenhalters 7 aus der Transporteinrichtung 9. Sowohl in der Bereitschaftsposition als auch in der Transporteinrichtungsposition stehen beide Auszugeinrichtungen 8 nicht mit dem Plattenhalter 7 in Eingriff. In diesen Positionen können die Auszugeinrichtungen 8 jedoch jeweils wahlweise in eine Eingriffsposition mit dem Plattenhalter 7 gebracht werden.

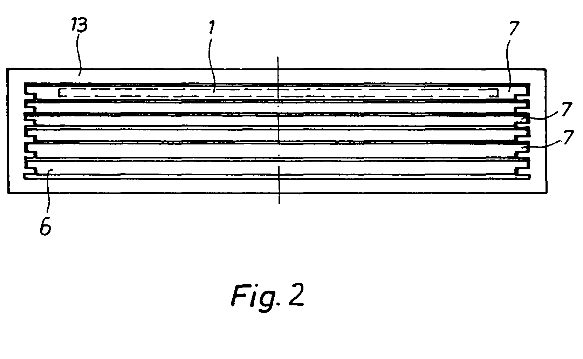

In Fig. 2 ist eine Aufbewahrungsart dargestellt, bei der mehrere Plattenhalter 7 mit jeweils eingelegter Platte 1 innerhalb einer Kassette 13 angeordnet sind. Die Kassette 13 wird in einem entsprechend vergrößerten Aufnahmefach 6 des Plattenmagazins 4 abgelegt.

## Patentansprüche

1. Wiedergabe- und/oder Aufzeichnungs- und/oder Ausgabegerät für als Informationsträger ausgebildete Platten (1), insbesondere CD-Platten, mit
- gegenüberliegenden Plattenmagazinen (4), die in horizontal übereinanderliegenden Aufnahmefächern (6) Plattenhalter (7) für mindestens eine Platte (1) aufnehmen,
- einer zwischen den Plattenmagazinen (4) angeordneten, rechnergesteuerten Transporteinrichtung (9) zur wahlweisen Hin- und Herbeförderung eines einzelnen Plattenhalters (7) mit der Platte (1) zwischen beliebigen Aufnahmefächern (6), zwischen einem Aufnahmefach (6) und mindestens einem Laufwerk (5) zum Auslesen oder Einschreiben von Informationen von der bzw. auf die Platte (1) oder zwischen einem Aufnahmefach (6) oder einem Laufwerk (5) und einem Platten-Lade/Ausgabe-Schubfach (10), und
- zwei auf der Transporteinrichtung (9) horizontal verfahrbaren Auszugeinrichtungen (8) für die Plattenhalter (7),
dadurch gekennzeichnet, daß mehrere Plattenhalter (7) mit jeweils zugehöriger Platte (1) innerhalb einer Kassette (13) untergebracht sind, die in einem entsprechend vergrößerten Aufnahmefach (6) des Plattenmagazins (4) abgelegt ist.
